# EUROPEAN PATENT SPECIFICATION

(11) **EP 1 686 816 B1**
(45) Date of publication and mention of the grant of the patent: **06.05.2015**
(21) Application number: 06250476.6
(22) Date of filing: 27.01.2006
(51) Int. Cl.: H04W 16/10, H04B 1/713, H04L 5/00

(54) **Determination of communication availability status in a cordless apparatus**
Bestimmung des Verfügbarkeitszustands einer Verbindung in einem schnurrlosen Kommunikationssystem
Determination de l'état de disponibilité de communication dans un système de communication sans fil

(30) Priority: 28.01.2005 JP 2005021694
(43) Date of publication of application: 02.08.2006
(73) Proprietor: Brother Kogyo Kabushiki Kaisha, Nagoya-shi, Aichi-ken 467-8561 (JP)
(72) Inventor: Ukon, Tsutomu c/o Technology Planning & IP Dept., Nagoya-shi, Aichi-ken 467-8562 (JP)
(74) Representative: Smith, Samuel Leonard

(56) References cited:
- EP-A- 0 452 872
- PATENT ABSTRACTS OF JAPAN vol. 1996, no. 05, 31 May 1996 (1996-05-31) & JP 08 009459 A (KOKUSAI ELECTRIC CO LTD), 12 January 1996 (1996-01-12)
- PATENT ABSTRACTS OF JAPAN vol. 018, no. 069 (E-1502), 4 February 1994 (1994-02-04) & JP 05 284098 A (MITSUBISHI ELECTRIC CORP), 29 October 1993 (1993-10-29)
- PATENT ABSTRACTS OF JAPAN vol. 017, no. 094 (E-1325), 24 February 1993 (1993-02-24) & JP 04 287432 A (SHARP CORP), 13 October 1992 (1992-10-13)

## Description

### TECHNICAL FIELD

Aspects of the present invention relate to a cordless apparatus including a main device and a mobile device that communicates with the main device wirelessly.

### BACKGROUND

Conventionally, a cordless telephone set including a main device connected to the telephone line network and a mobile device connected with the main device via a wireless network is known. The main device and the mobile device perform the radio communication periodically during standby state in which the main device does not connect the mobile device with the telephone line network.

In this cordless telephone set, during the radio communication in standby, the main device transmits radio signals first. The mobile device receives the radio signals from the main device, and based on the received signal, determines whether the user can communicate by using the mobile device and displays the determination result on a display of the mobile device. (for example, refer to JP-A-5-284098)

JP 08 009459 discloses a cordless telephone in which the signal strength of the latest received control signal is displayed on the cordless handset.

JP 05 284098 discloses a cordless telephone set in which the handset sends signals to the base unit indicating the strength of a received control signal.

EP 0,452,872 discloses a cordless telephone system in which access units are divided into groups each of which groups have a uniquely assigned control channel different in frequency from the control channel of the other group.

### SUMMARY

In the case where a radio equipment that uses the same frequency as that used in the radio communication performed between the main device and the mobile device of the cordless telephone set in standby exists within a communication area of the cordless telephone set, failures in the function of the radio equipment occur due to the radio signals transmitted and received between the main device and the mobile device.

In this case, the more frequently the radio communication performed in standby is implemented between the main device and the mobile device, the more the failures in the function of the radio equipment occur.

In order to reduce the effect of the cordless telephone set to the radio equipment, the repetition of radio communication between the main device and the mobile device should be lessened.

However, in this case, it becomes slow for the cordless telephone set to update the determination result displayed in the mobile device in standby. For example, cases might happen where the display contents are not changed even when the user moves with taking the mobile device, and where the user cannot make a phone call by operating the mobile device even though the callable state is displayed on the display, which make the user feel uncomfortable.

Aspects of the present invention provide a cordless apparatus, which reduces the effect on other radio equipment that uses the same frequency band as that used in the radio communication in standby between a main device and an additional device of the cordless apparatus, and which enables to increase the repetition of the radio communication.

According to an aspect of the invention, there is provided a cordless apparatus comprising: a main device; and an additional device adapted for communicating with the main device by radio; wherein the main device and the additional device each have a communication unit; the main device comprises a transmittance control unit adapted to transmit radio signals intermittently from the communication unit of the main device during standby of the additional device; and the additional device comprises a signal strength detection unit adapted to detect a signal strength of the radio signal when the radio signal transmitted from the main device is received by the communication unit of the additional device during standby of the main device, and a notification unit adapted to notify the signal strength of the radio signal detected by the signal strength detection unit; characterized by each communication unit being capable of selecting a radio channel used for radio communication from a plurality of radio channels of which frequencies are different from each other; and in that the main device is further adapted to change the radio channel on every transmittance of the radio signals.

According to this, since the main device and the additional device switch the radio channel for the wireless communication in standby, it is possible to lessen the effect on other radio equipments using one of the radio channels. Also, it is possible to increase the repetition of the communication between the main device and the additional device.

### BRIEF DESCRIPTION OF THE DRAWINGS

Illustrative aspects of the invention may be more readily described with reference to the accompanying drawings:
Fig. 1 is a perspective view of a cordless telephone set according to an aspect of the present invention;
Figs. 2A and 2B are perspective view of a mobile device and a charging stand for the cordless telephone set;
Fig. 3 is a block diagram showing the electrical configuration of the cordless telephone set;
Fig. 4 is an explanatory view for explaining a graphic generation table;
Fig. 5 is a sequence diagram showing the operation executed between a main device and a mobile device in standby;
Figs. 6A and 6B are flowcharts showing a display command transmit process and a communication situation display process executed in a main device and a mobile device in standby according to a first aspect of the invention;
Fig. 7 is an explanatory diagram explaining a graphic displayed on a display panel of a mobile device in standby;
Fig. 8 is a flowchart showing a communication situation display process executed in a mobile device according to a second aspect of the invention;
Fig 9 is a flowchart showing a communication situation display process executed in a mobile device according to a third aspect of the invention;
Fig. 10 is an explanatory diagram explaining a graphic generation table after change; and
Fig. 11 is a flowchart showing a communication situation display process executed in a mobile device according to a fourth aspect of the invention.

### DETAILED DESCRIPTION

Aspects of the present invention will be described below with reference to the drawings.

### [First aspect]

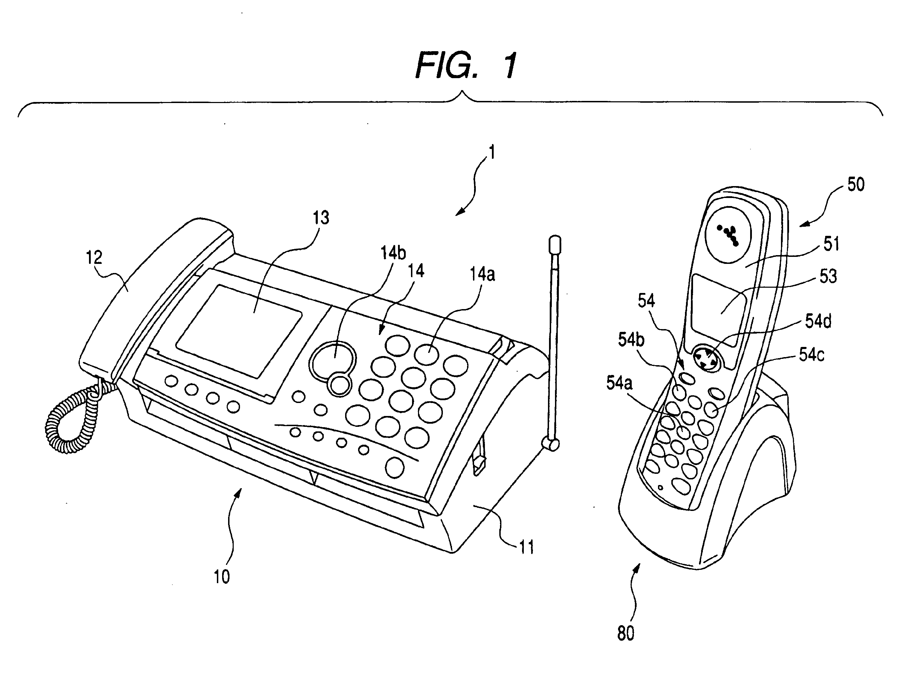

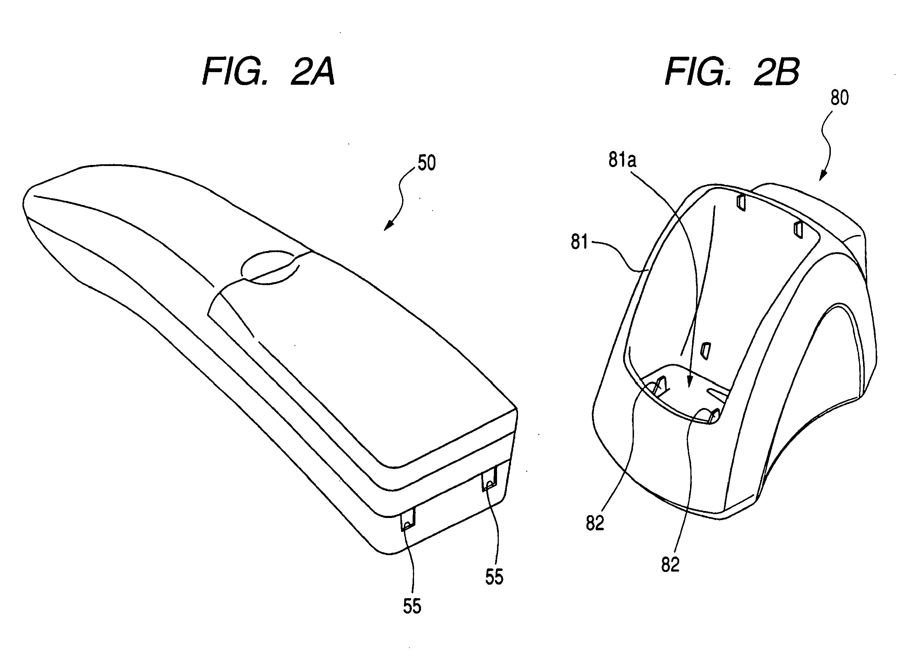

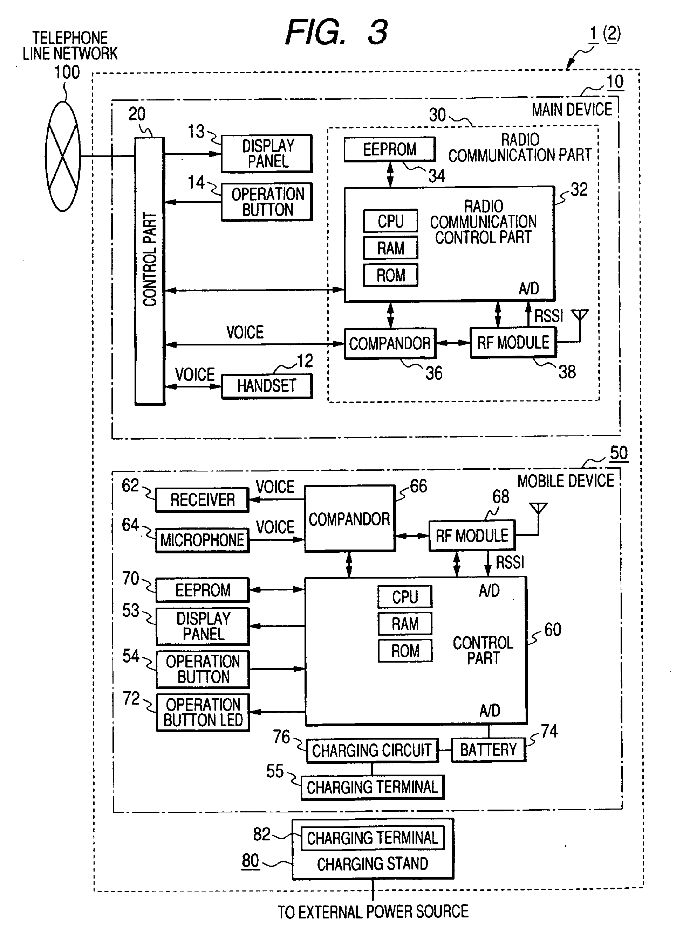

Fig. 1 is a perspective view of a cordless telephone set 1 according to an aspect of the invention. Fig. 2A is a perspective view showing the rear face of a mobile device 50 and Fig. 2B is a perspective view of a charging stand 80. Fig. 3 is a block diagram showing the electrical configuration of the cordless-telephone set 1.

The cordless telephone set 1 has a function (telephone call function) of talking over the telephone via a telephone line network 100 (see Fig. 3) and a function (facsimile function) of transmitting or receiving the image data via the telephone line network 100, and, as shown in Fig. 1, includes a main device 10 connected to the telephone line network 100, a mobile device 50 connected via a radio circuit to the main device 10, and a charging stand 80, connected to an external power source, not shown, for charging the mobile device 50 at a predetermined voltage, the mobile device 50 being laid detachably. In the cordless telephone set 1 of this aspect, the components regarding the facsimile function are not directly related with the invention, and not described here.

The main device 10 has a handset 12 that is a transmitter-receiver on the side portion of a main device main case 11, in which the handset is detached from a main body of the main device 10, when used. Moreover, a display panel 13 for displaying the information relevant to various kinds of functions and various kinds of operation buttons 14, including a dial button 14a for inputting the telephone number of the other party and a selection button 14b that is operated for selecting from the menu screen displayed on the display panel 13 are provided on an upper face of the main device main case 11. The display panel 13 is a liquid crystal display (LCD) with a back light for illuminating the display screen from the back side.

The mobile device 50 includes a display panel 53 for displaying the information relevant to various kinds of functions, various kinds of operation buttons 54 including a dial button 54a for inputting the telephone number of the other party, an outside line call button 54b that is operated in starting the outside line call, an off button 54c that is operated in terminating the talking, and a selection button 54d that is operated for selecting from the menu screen displayed on the display panel 53, and a charging terminal 55 (see Fig. 2A) for charging a battery 74 (see Fig. 3) for supplying electric power to the whole of the mobile device 50 from a charging stand 80 on the surface of a mobile device main case 51 having a shape of handset.

The display panel 53 is a liquid crystal display (LCD) with a back light for illuminating the display screen from the back side.

The charging stand 80 includes a charging stand main body 81 formed with a laying concave portion 81a on which the mobile device 50 is detachably laid, and a charging terminal 82, provided within the laying concave portion 81a, for making contact with the charging terminal 55 when the mobile device 50 is laid on the laying concave portion 81a, as shown in Fig. 2B.

Referring to Fig. 3, an electrical configuration of the cordless telephone set 1 will be described below.

The main device 10 includes a control part 20 for controlling the overall operation of the main device 10, a handset 12, a display panel 13, an operation button 14, and a radio communication part 30 for transmitting or receiving by radio a voice signal or a data signal (command) to or from the mobile device 50.

An output signal from the operation button 14, an output signal (voice or data signal) from the radio communication part 30 and a voice signal from outside of the cordless telephone set 1 are inputted into the control part 20.

Also, the control part 20 establishes a transmission path between transmission destination and transmission source of the voice signal inputted or outputted from outside of the cordless telephone set 1. More specifically, when the handset 12 is removed from the main body of the main device 10, the transmission path is switched to the handset 12, or when the telephone call start operation for starting the telephone call is performed by the mobile device 50, the transmission path is switched to the radio communication part 30.

Moreover, the control part 20 outputs a data signal or a voice signal for radio communication with the mobile device 50 to the radio communication part 30, and outputs a voice signal from the handset 12 and the radio communication part 30 to the outside of the cordless telephone set 1.

The radio communication part 30 includes a radio communication control part 32 composed of a CPU, a RAM, a ROM and an A/D converter, an EEPROM 34, a compander36, and an RF module 38 for making the radio communication with the mobile device 50.

The compander36 acquires a radio signal sent from the mobile device 50 via the RF module 38, and segregates its signal into a voice signal and a data signal, the voice signal being sent to the control part 20, and the data signal being sent to the radio communication control part 32. Also, the compander36 sends the voice signal from the control part 20 or the data signal from the radio communication control part 32 to the RF module 38.

The RF module 38 is configured to be communicable with the radio communication control part 32, selects a radio channel for use in the radio communication from among a plurality of radio channels having different frequencies in accordance with a command from the radio communication control part 32, and sends an output signal from the compander36 to the mobile device 50, as well as receives the radio signal sent from the mobile device 50, employing the selected radio channel.

In this aspect, the radio channels that the RF module 38 employs for radio communication are 89 radio channels with a frequency interval between each radio channel being 12.5kHz in a band of 380MHz. The radio channels that the mobile device 50 (more particularly the RF module 68) employs for radio communication are 89 radio channels with a frequency interval between each radio channel being 12.5kHz in a band of 280MHz. Among them, the 46 channel and the 89 channel are employed to transmit or receive the data signal alone, and any one of the remaining 1 channel to 45 channel and 47 channel to 88 channel is employed to transmit or receive the voice signal. In the following explanation, the 46 and 89 channels are called a control channel and the 1 to 45 and 47 to 88 channels are called a communication channel to distinguish the radio channels used between the main device 10 and the mobile device 50.

Also, the RF module 38 detects the signal strength of a signal received by radio from the outside, and outputs its detection result to the A/D converter of the radio communication control part 32. In this aspect, the A/D converter of the radio communication control part 32 converts the detection result inputted from the RF module 38 into a digital value of 8 bits.

The data signal outputted from the control part 20 or the compander36 is inputted into the radio communication control part 32. The radio communication control part 32 outputs the data signal from the control part 20 to the compander36.

Also, the radio communication control part 32 selects the available radio channel, based on the signal strength detected by the RF module 38, and transmits its result to the RF module 38, when the main device 10 starts the communication with the mobile device 50. According to this, the main device 10 starts the radio communication with the mobile device 50 by using the radio channel selected by the radio communication control part 32.

Moreover, while the main device 10 suspends the connection of the mobile device 50 to telephone line network 100 and is in standby, the radio communication control part 32 periodically outputs commands to the compander 36 for displaying the communication state with the main device 10 on the mobile device 50, and simultaneously changes the control channel by every output of the communication state displaying command and makes the RF module 38 to select the changed control channel.

Then, the RF module 38 in standby periodically transmits radio signals by using the control channel and changes the control channel on every transmittance of the radio signals.

The mobile device 50 includes the control part to control the whole operation of the mobile device 50, the display panel 53, the operation button 54, the receiver 62, the microphone 64, the compander 66 and the RF module 68 to transmit and receive the voice signals or date signals through the radio communication with the main device 10 (with the RF module 38) therebetween, the EEPROM 70, the operation button LED 72 for lightening the operation button 54 from the backward, the battery 74 for supplying the whole mobile device 50 with power source, the charging terminal 55 for electrical connection with the charging terminal 82, and the changing circuit 76 for charging the battery 74 by power voltage supplied from the charging stand 80 through the charging terminal 55.

The compander 66 receives the radio signals transmitted from the main device 10 through the RF module 68, divides the signals into the voice signals and data signals, and sends the voice signals to the receiver 62 and the data signals to the control part 60. Moreover, the compander 66 transmits voice signals received from the microphone 64 or data signals received from the control part 60 to the RF module 68.

The RF module 68, which is configured to communicate with the control part 60, selects the radio channel for the radio communication out of the 89 radio channels, transmits the output signals received from the compander 66 to the main device 10 by using the selected radio channel, and simultaneously receives the radio signals transmitted from the main device 10 on the basis of instructions from the control part 60.

Moreover, the RF module 68, detecting the signal strength of signals received from the outside through the radio communication, outputs the detection result to the A/D converter embedded in the control part 60. In this aspect, the detection result inputted from the RF module 68 is converted to 8-bit digital value (hereinafter, called as "RSSI value") in the A/D converter of the control part 60.

The control part 60 includes a CPU, a RAM, a ROM, and the A/D converter, etc. , to which output signals from the operation button 54 or the data signals from the compander 66 are inputted. Moreover, the control part 60 outputs the data signals for performing the radio communication with the main device 10 to the compander 66.

Moreover, the control part 60 is configured to communicate with the RF module 68, and selects the usable radio channels and transmits the result to the RF module 68 based on the signal strength detected in the RF module 68 when the mobile device 50 starts to communicate with the main device 10.

According to this, the mobile device 50 starts the radio communication with the main device 10 by using the radio channel selected by the control part 60.

Moreover, when the control part 60 receives the communication situation display command through the compander 66 while the mobile device 50 is not connected with the telephone line network through the main device 10 and is in standby, the control part 60 acquires the signal strength of the radio signals that is detected by the RF modular 68 at that time and is transmitted from the main device 10, that is, radio signals including the communication situation display command.

Furthermore, the control part 60 digitizes the RSSI value by stages by comparing the acquired signal strength, which is namely RSSI value, with a plurality of threshold values stored in the ROM, and the schematic graphic is generated and then the generated graphic is displayed on the display panel 53 as the communication situation with the main device 10 on the basis of the digitized result.

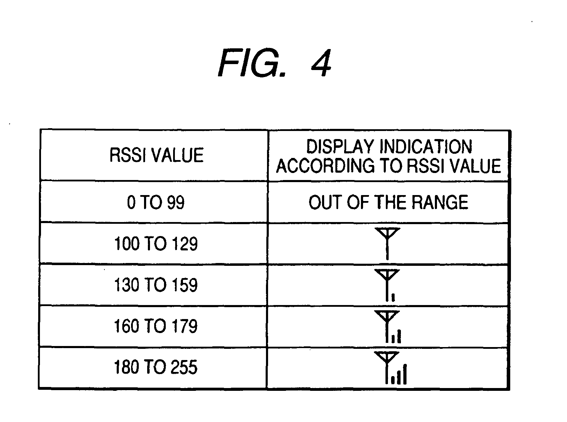

Specifically, a graphic generation table is stored in the ROM of the control part 60. The graphic generation table separates 0 to 255 values into five stages by a plurality of threshold values, and the graphic generated from the control part 60 is related to every step as described in Fig. 4.

That is, in the graphic generation table, as the threshold value increases, that is, toward the bottom of the Fig. 4, the corresponding graphic reflects the communication state which is getting better as follows: the lowest level of 0 to 99 corresponds to the graphic representing the state that the mobile device 50 cannot communicate with the main device 10 and the secondly lowest level of 100 to 129 corresponds to the graphic representing the worst state of communication situation with the main device 10. In the aspect, the worst communication state means the worst communication state in the condition that the communication between the main device 10 and the mobile device 50 is possible.

When the control part 60 receives an RSSI value from the RF module 68, the control part 60 refers to the graphic generation table and extracts the graphic corresponding to the acquired RSSI value. Furthermore, when the control part 60 extracts the graphic from the graphic generation table, the control part 60 makes the display panel 53 to display the graphic.

Moreover, when the control part 60 makes the display panel 53 to display the communication state with the main device 10 on the basis of the communication state displaying command, the control part 60 outputs a display end command representing the execution of this time's communication state displaying command to the compander 66, and selects the control channel used for this time's instruction and transmits the result to the RF module 68.

According to this, the mobile device 50 transmits the display end command to the main device 10 by using the control channel selected by the control part 60, that is, the control channel used by the main device 10 to transmit the communication state displaying command.

The charging stand 80 has the above-mentioned charging terminals 82, generates the predetermined power voltage by being supplied from the external power source, and performs electric supply to the mobile device 50.

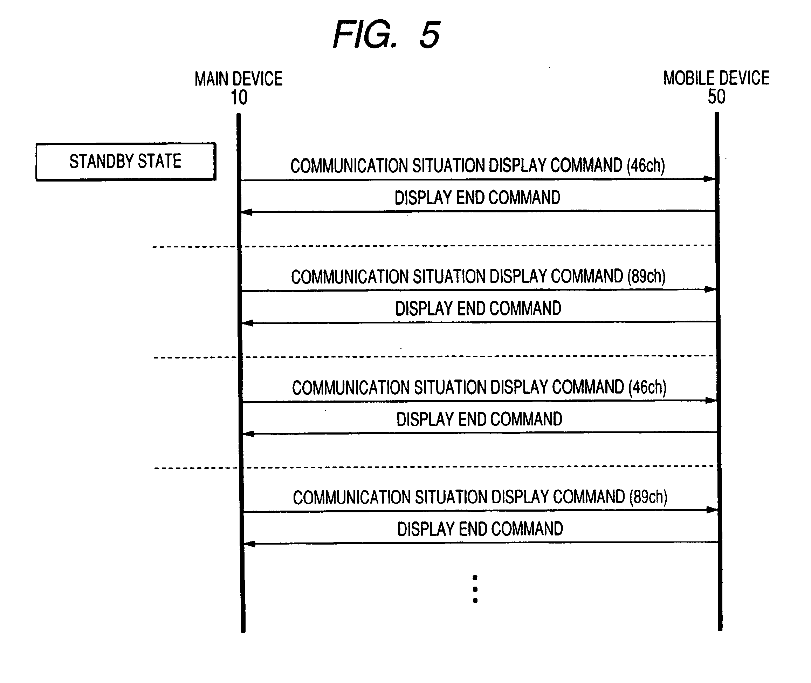

Hereinafter, the operation performed between the main device 10 and the mobile device 50 in standby will be explained based on Fig. 5.

When the user making the phone call with the cordless telephone set 1 ends up the call, for example, when the user calling with the mobile device 50 ends up the call by pushing the end button 54c, the main device 10 transmits the communication situation display command to the mobile device 50 by using the predetermined control channel, for example, the 46th channel.

The mobile device 50, having received the communication situation display command, acquires the strength of radio signals received from the main device 10 through the control channel, which is the 46th channel in this example, makes the display panel 53 to display the graphic extracted from the graphic generation table as the communication situation with the main device 10 based on received RSSI value, and then transmits the display end command to the main device 10 by using the 46th channel.

The main device 10, having received the display end command, changes the control channel from the 46th to the 89th and transmits the communication situation display command to the mobile device 50 by using the 89th channel predetermined time after the last transmittance of the communication situation display command, for example, after 30 seconds.

The mobile device 50, having received the communication situation display command, acquires the signal strength of the radio signals transmitted from the main device 10 through the 89th channel, displays the graphic extracted from the graphic generation table based on the received signal strength, which is RSSI values, updates the communication situation displayed at the last time, and then transmits the display end command to the main device 10 by using the channel.

The main device 10, which has received the display end command, changes the control channel from the 89th channel to the 46th channel and transmits the communication situation display command to the mobile device 50 by using the 46th channel predetermined time after the last transmittance of the communication situation display command.

As described above, until the user starts to call by using the cordless telephone set 1, the main device 10 transmits the communication situation display command to the mobile device 50 on every predetermined time and changes the control channel on every transmittance, and the mobile device 50 repetitively transmits the display end command to the main device 10 by changing the communication situation with the main device 10 on every reception of the communication situation display command as stated above.

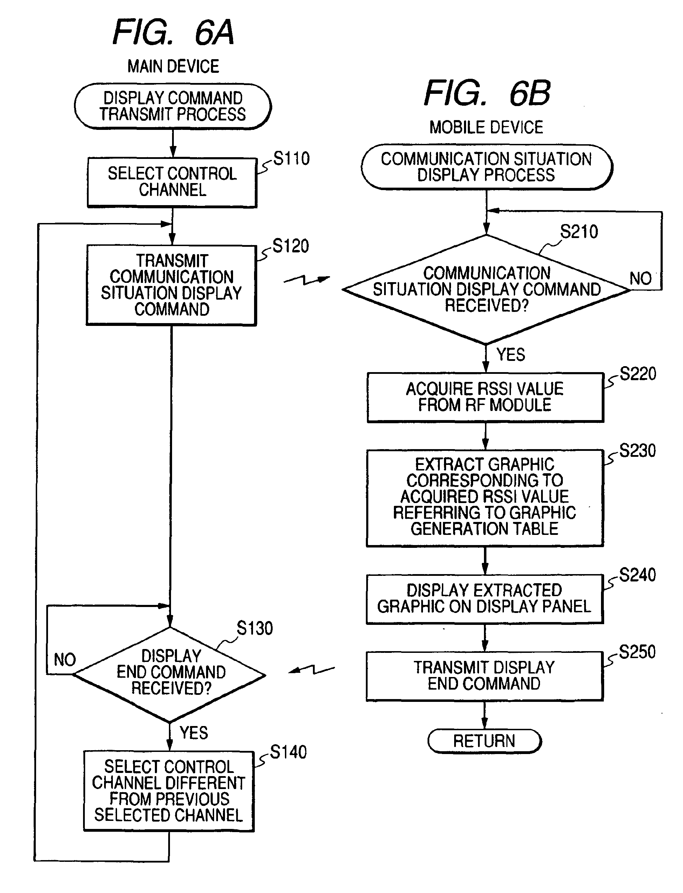

Concerning the cordless telephone set 1, the display command transmit process executed in the radio communication control part 32 in standby and the communication situation display process executed in control part 60 are described using flowcharts shown in Figs. 6A and 6B. Figs. 6A and 6B are the flowcharts representing the process implemented in the main device 10 and the mobile device 50 in standby. Fig. 6A is the flowchart representing the process performed in the radio communication control part 32 in standby, and Fig. 6B is the flowchart representing the communication situation display process executed in the control part 60 in standby.

First, the display command transmit process will be described. After stopping the connection of the mobile device 50 of which the main device 10 is connected with the telephone line network 100, this display command transmit process is executed until the call instruction is inputted from the main device 10 or the mobile device 50, or the signal is received from the outside.

When the radio communication control part 32 starts the display command transmit process in Fig. 6A, first of all, a control channel is selected in step S110 and the result is transmitted to RF module 38. In step S120, the communication situation display command is outputted to the compander 36.

Then, RF module 38 transmits the communication situation display command to the mobile device 50 by using the control channel, which the radio communication control part 32 selected in step S 110.

Then, in step S130, receiving the display end command transmitted from the mobile device 50 for the communication situation display command is waited for and step S140 is executed. In addition, in step S130 of the first aspect, the corresponding display command transmit process is terminated in case the display end command cannot be received in spite of the passage of the predetermined time.

In step S140, when the control channel different from the control channel selected previously is chosen and the result is transmitted to the RF module 38. After the passage of the predetermined time from the previous processing of step S120, the return to step S120 is performed.

Next, the communication situation display process is specified. In the same manner as the display command transmit process, after stopping the connection of the mobile device 50 of which the main device 10 is connected with the telephone line network 100, this communication situation display process is also executed until the call instruction is inputted from the main device 10 or the mobile device 50 or the signal is received from the outside.

When the control part 60 starts processing of the communication situation display shown in Fig. 6B, first of all, receiving the communication situation display command is waited for in step S210. The signal strength of the radio signal in the main device 10 detected by RF tye module 68 is acquired in receiving in subsequent step S220.

Then, in step S230, referring to the graphic generation table stored in ROM, the graphic corresponding to the RSSI value acquired in step S220 is extracted.

Furthermore, in step S240, by outputting the graphic extracted in step S230 on the display panel 53, the graphic is displayed on the display panel 53.

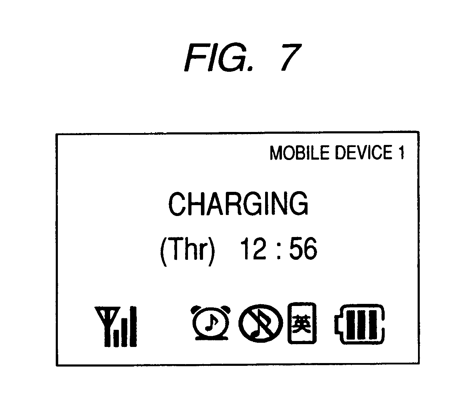

Here, for example, when the RSSI value acquired in step S220 is 200, the graphic corresponding to the highest level (180~255) in Fig. 4 is displayed on the left bottom part of the display panel 53 as shown in Fig. 7. Furthermore, the current time or the operation condition of the mobile device 50 is displayed on the display panel 53 in addition to the communication situation with the main device 10 displayed in step S240.

Next, in step S250, when the display end command is outputted to the compander 66 and simultaneously, the control channel used in this time's communication is selected, the display end command is wirelessly transmitted to the RF module 68 and the process returns to step S210.

As described above, in the cordless telephone set of the first aspect, the main device 10 transmits the communication situation display command to the mobile device 50 on every predetermined time and changes the control channel on every transmittance, and the mobile device 50 updates the communication situation with the main device 10 and transmits the display end command to the main device 10.

According to the cordless telephone set 1, since the main device 10 and the mobile device 50 have few effects on other radio equipments using only one type of control channel because switching between the two control channels utilized for the radio communication in standby is performed. Thus, the repetition of the communication between the main device 10 and the mobile device 50 can be increased.

Moreover, since the main device 10 transmits the radio signal (the communication situation display command) to the mobile device 50 by changing the control channel after the passage of the predetermined time in case of receiving the display end command from the mobile device 50, unnecessary waste of the power consumption can be restrained. Also, the effect on other radio equipments using one out of the control channels can be still more reduced.

Furthermore, according to the cordless telephone set 1, since the graphic corresponding to the RSSI value is displayed on the display panel 53 by comparing the RSSI value with the plurality of threshold values of the graphic generation table, the user can easily check the communication situation with the main device 10 by taking one look at the display panel 53.

According to the first aspect, the RF modules 38, 68 functions as a communication unit, and the display command transmit process functions as a transmittance control unit. Also, the RF module 68 functions as a signal strength detection unit, and the process of step S220 to step S240 functions as a notification unit. In addition, the control channel functions as a control radio channel, and the display panel 53 functions as a display unit.

### [Second aspect]

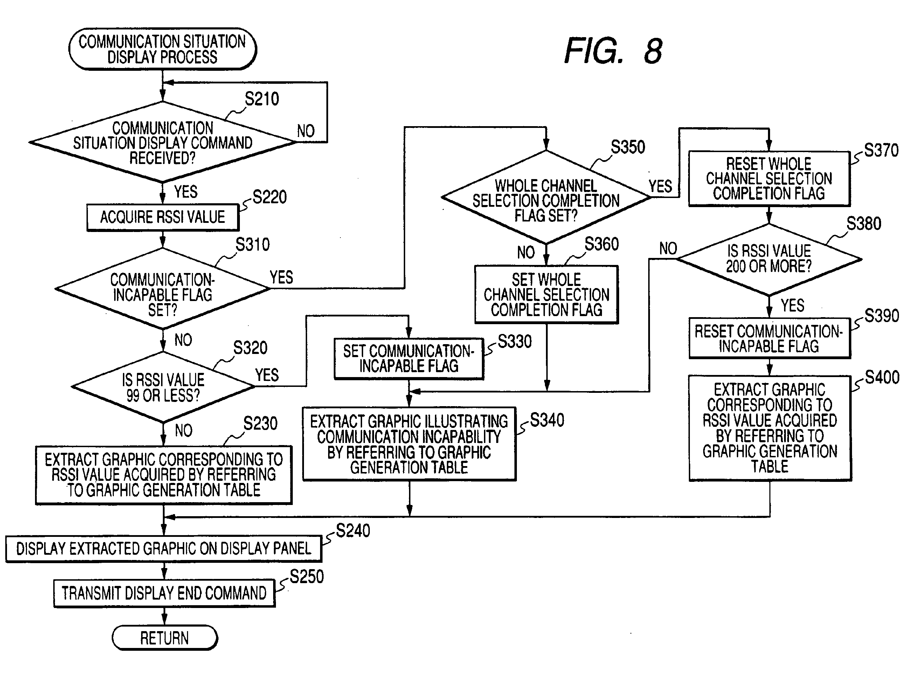

Next, a cordless telephone set according to a second aspect will be described with reference to Fig. 8. Fig. 8 is a flowchart showing a communication situation display process executed in a mobile device 50 of the second aspect in standby.

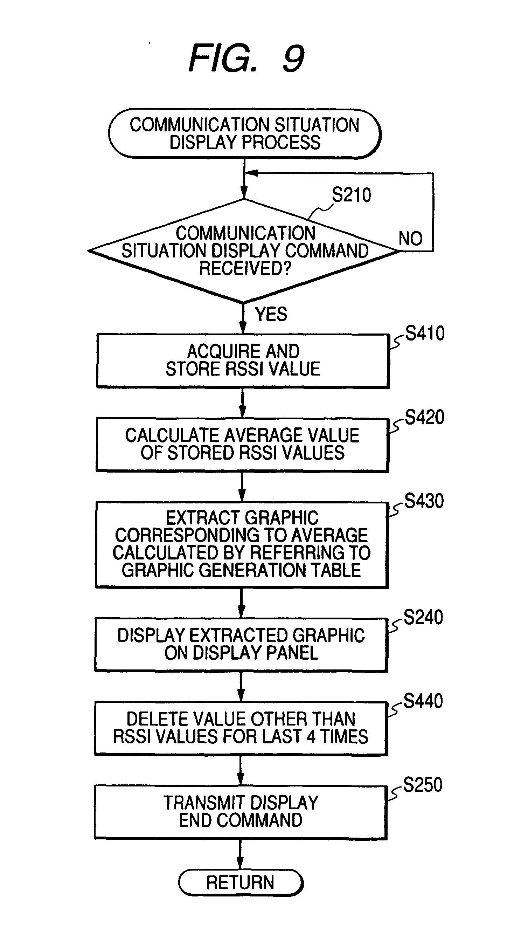

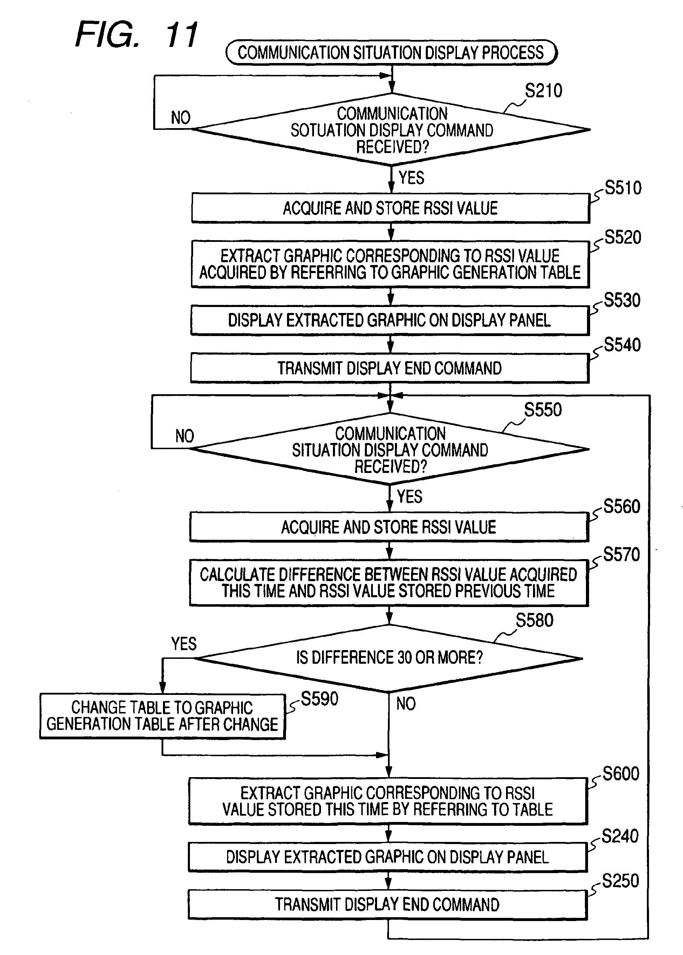

Compared with the cordless telephone set 1 of the first aspect, the cordless telephone set according to the second aspect differs in that the mobile device 50 performs the communication situation display process of Fig. 8 on behalf of the communication situation display process of Fig. 6B. Incidentally, in the process of Fig. 8, since the same step number is given to the same process, the detailed description of them is omitted. This is also applied to Figs. 9 and 11 as described below.

When the control part 60 ends the process of step S210 and step S220 by executing the communication situation display process of Fig. 8, the process proceeds to step S310.

In step S310, whether or not a communication-incapable flag representing that the communication with the main device 10 is unavailable is set is determined.

In step S310, when it is determined that the communication-incapable flag is not set, the process proceeds to step S320 and in step S320, it is determined whether the RSSI value acquired in step S220 is 99 or less.

In step S320, when determined that the RSSI value is not 99 or less, the process proceeds to step S230. In the same manner as the first aspect, the process proceeds from step S240 to step S250 and returns to step S210.

Meanwhile, in step S320, when the RSSI value is 99 or less, the process proceeds to step S330.

The communication-incapable flag is then set in step S330 and in subsequent step S340, the graphic (graphic located on the top in Fig. 4) representing that the mobile device 50 is incapable of communicating with the main device 10 is extracted by referring to the graphic generation table. Then, the process proceeds to step S240.

The graphic extracted in step S340 is displayed on the display panel 53. Then, the process proceeds to step S250.

When it is determined that the communication-incapable flag is set in step S310, the process proceeds to step S350. It is determined whether or not the whole channel selection completion flag representing all control channels have already been selected is set.

Then, when it is determined the whole channel selection completion flag is not set in step S350, the process proceeds to step S360 and proceeds to step S340 by setting the whole channel selection completion flag.

Meanwhile, when it is determined the whole channel selection completion flag is set in step S350, the process proceeds to step S370 and proceeds to step S380 by resetting the whole channel selection completion flag.

In step S380, it is determined whether or not the RSSI value acquired in step S220 is 200 or more.

When it is determined that the RSSI value is not 200 or more in step S380, the process proceeds to step S340. When it is determined that the RSSI value is 200 or more, the process proceeds to step S390.

Then, in step S390, the communication-incapable flag is reset and the process proceeds to step S400.

In step S400, the graphic corresponding to the RSSI value acquired in step S220 is extracted by referring to the graphic generation table and the process proceeds to step S240.

Then, in step S240, the graphic extracted in step S400 is displayed on the display panel 53 and the process proceeds to step S250.

As described above, in the cordless telephone set of the second aspect, in case that the RSSI value of two control channels in the control channel is more than the predetermined level, the display of the communication situation is regularly. performed, while in case that at least one of the RSSI values is not more than the predetermined level, the result that the mobile device 50 cannot communicate with the main device 10 is displayed on the display panel 53.

According to the cordless telephone set of the second aspect, it can be certainly prevented that the communication is not available in spite of the operation of the mobile device 50 executed by the user when the graphic representing the communication-capable condition is displayed through the display panel 53.

In the second aspect, the process of S220 to S240 and S310 to S400 function as a notification unit.

### [Third aspect]

Next, a cordless telephone set of a third aspect will be described with reference to Fig. 9. Fig. 9 is a flowchart showing a communication situation display process implemented in a mobile device 50 in standby of the third aspect.

Compared with the cordless telephone set 1 of the first aspect, the cordless telephone set of the third aspect differs from the first aspect in that the mobile device 50 carries out the display process of the communication situation of Fig. 9 instead of the display process of the communication situation of Fig. 6B.

That is, when the control part 60 executes the communication situation display process and receives the communication situation display command, the process proceeds to step S410. The signal strength of the radio signal from the main device detected by the RF module 68 in the case of reception is acquired, and the acquired signal strength (RSSI value) is stored in, for example, EEPROM 70 .

Next, in step S420, the RSSI values stored in EEPROM 70 are read, and the average value of the RSSI values thus read is calculated.

Then, in step S430, the graphic corresponding to the average value calculated with reference to the graphic generation table in step S420 is extracted.

Subsequently, in step S240, the graphic is displayed on the display panel by outputting the extracted graphic on the display panel in step S430.

Next, in step S440, all excepting the last four times RSSI values are deleted.

Then, in step S250, the display end command is transmitted by the RF module 68 through the radio, and the process returns to step S210.

In step S410, when the number of RSSI values stored in EEPROM 70 is 4 or less, only the average value of RSSI values stored in EEPROM 70 is calculated.

As described above, in the cordless telephone set of the third aspect, the mobile device 50, based on the average value of the last past 5 times signal strength (RSSI value), generates a schematic graphic, and displays the graphic as the communication situation with the main device 10 on display panel 53.

According to the cordless telephone set of the third aspect, since the averaged communication situation is displayed, the communication situation can be displayed on the display panel 53 without the effect of disturbance, and the user can grasp how smoothly the mobile device 50 can communicate with the main device 10.

In the third aspect, the process of step S240 and step S410 to step S440 functions as a notification unit.

### [Fourth aspect]

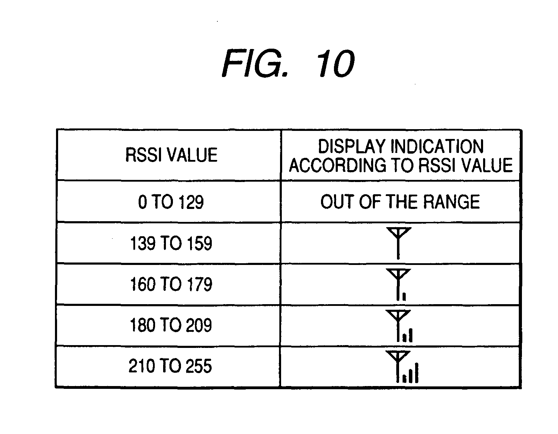

Next, a cordless telephone set of a fourth aspect will be described with reference to Fig. 10 and Fig. 11.

Compared with the cordless telephone set of the first aspect, the cordless telephone device of the fourth aspect displays the communication situation with the main device on a display panel 53 by updating a graphic generation table based on the signal strength of communication situation display command that the mobile device 50 receive from the main device 10. Fig. 10 is an explanatory diagram explaining a graphic generation table after change. Fig. 11 is a flowchart illustrating a communication situation display process executed in a mobile device in standby according to the fourth aspect.

Compared with the mobile device of the first aspect, the mobile device of the fourth aspect is different in two points.

First, in the ROM of the control part 60, the graphic generation table in Fig. 4 and the graphic generation table after change illustrated in Fig. 10 is stored. Specifically, each of the threshold value of the respective level of the graphic generation table after change, as illustrated in Fig. 10, is set higher than that of the respective level of the graphic generation table.

the control part 60 executes the communication situation display process of Fig. 11 instead of the process shown in Fig. 6B.

When the control part 60 executes the communication situation display process of Fig. 11 and receives the communication situation display command in step S210, the process proceeds to step S510. The signal strength of the radio signal from the main device detected by the RF module 68 in the case of reception is acquired, and the acquired signal strength (RSSI value) is stored in, for example, EEPROM 70.

Then, in step S520, the graphic corresponding to the RSSI value stored in step S510 with reference to the graphic generation table is extracted.

Next, in step S530, the graphic is displayed on the display panel 53 by outputting the extracted graphic on the display panel 53 in step S520, and then, in step S540, the display end command is transmitted by the RF module 68 through the radio.

Then, in step S550, if waiting for the communication situation display command until it is received and receiving it, next, in step S560, the signal strength of the radio signal from the main device detected by the RF module 68 in the case of reception is acquired, and the acquired signal strength (RSSI value) is stored in EEPROM 70.

Next, in step S570, the difference between the RSSI value stored in EEPROM 70 this time and the previous RSSI value stored in EEFROM 70 previous time is calculated. In the fourth aspect, in S570, when the difference is calculated, the RSSI value stored in EEPROM 70 previously is deleted.

Then, in step S580, it is determined whether or not the difference calculated in step S570 is the predetermined threshold value or more (30 in the fourth aspect). Although in the fourth aspect, the threshold value for this determination is set 30, it is not limited thereto. However, it is preferable to be set properly.

Then, in step S580, in case it is determined that the difference is 30 or more, the process proceeds to step S590, and the table referred to in step S600 is converted from the graphic generation table to the graphic generation table after change, and then the process proceeds to step S600.

Meanwhile, in step S580, in case it is determined that the difference is not 30 or more, the process directly proceeds to step S600.

Then, in step S600, with reference to the graphic generation table, the graphic corresponding to the RSSI value stored in step S560 is extracted.

Specifically, in step S600, in case that the process of step S590 is executed after the communication situation display process is executed, with reference to the graphic generation table after change, the graphic corresponding to the RSSI value stored in step S560 is extracted. Meanwhile, in case that the process of step S590 is not executed at all after the communication situation display process is executed, with reference to the graphic generation table, the graphic corresponding to the RSSI value stored in step S560 is extracted.

Then, in step S240, the graphic extracted in step S600 is displayed on the display panel 53.

Then, when the process of step S240 is ended, the process proceeds to step S250, and when the process of step S250 is ended, the process returns to step S550.

As described above, in the cordless telephone set of the fourth aspect, if the difference of RSSI values of two control channel is the predetermined value or more, the threshold value for comparing RSSI value is increased.

Therefore, according to the cordless telephone set of fourth aspect, it can be prevented that communication situation is severely changed whenever it is updated by the generated difference of RSSI values of two control channel.

In the fourth aspect, the process of step S240 and step S510 to step S600 function as a notification unit.

Although the aspects of the invention are described above, various aspects can be employed.

In the above aspects, the cordless telephone set includes the function of the facsimile. As long as it has the function of the telephone terminal, the same effects as the above-mentioned aspects can be acquired regardless of having any function.

Moreover, according to the aspects, in case that the display end command is not received despite of the passage of the predetermined time in step S130 of the display command transmit process, it is required that the corresponding process is ended. However, the process may proceed to step S140 without the ending.

In addition, it may be configured that the operation button LED 72 is required to light when an invalid communication condition is detected, so that the user can verify the invalid communication condition without viewing the display panel 53.

In addition, according to the first aspect, the graphic extracted from the graphic generation table is displayed on the display panel 53 in step S240. Alternatively, in step S240, the RSSI value acquired in step S220 may be displayed as it is. In this case, it is allowed that the process of step S230 is not executed.

Moreover, according to the third aspect, the average RSSI value for the last 5 times is calculated. Alternatively, in step S240, the average RSSI value for the last plural times may be calculated, or the deviation of the RSSI value for the last plural times may be computed.

Furthermore, according to the aspects of the invention, the process can be applied to the cordless telephone set. Alternatively, the process can be applied to any other cordless apparatus which perform the radio communication between the main device and the mobile device. For example, the process can be applied to an interphone device installed in companies, a homes and the like.

## Claims

1. A cordless apparatus (1) comprising:
a main device (10); and
an additional device (50) adapted for communicating with the main device by radio;
wherein the main device and the additional device each have a communication unit (30, 60);
the main device comprises a transmittance control unit adapted to transmit radio signals intermittently from the communication unit of the main device during standby of the additional device; and
the additional device comprises a signal strength detection unit (68) adapted to detect a signal strength of the radio signal when the radio signal transmitted from the main device is received by the communication unit of the additional device during standby of the main device, and a notification unit adapted to notify the signal strength of the radio signal detected by the signal strength detection unit;
**characterized by** each communication unit being capable of selecting a radio channel used for radio communication from a plurality of radio channels of which frequencies are different from each other; and
in that the main device is further adapted to change the radio channel on every transmittance of the radio signals.

2. The cordless apparatus according to claim 1, wherein the additional device is adapted to transmit a response signal from the communication unit when the radio signal transmitted from the main device is received by the communication unit of the additional device during standby; and
the transmittance control unit is adapted to change the radio channel used for transmitting the radio signal and then transmit the radio signal through the communication unit after a passage of a predetermined time from a reception of the response signal by the communication unit of the main device.

3. The cordless apparatus according to claim 1 or 2, wherein based on the signal strength periodically detected for each radio channel by the signal strength detection unit, the notification unit is adapted to determine whether the signal strength of all radio channels is a predetermined level or more, notify the signal strength detected by the signal strength detection unit to inform that the additional device is on a condition able to communicate with the main device when the signal strength of all radio channels is the predetermined level or more, and notify the user that the additional device is on a condition unable to communicate with the main device when the signal strength of at least one radio channel is not the predetermined level or more.

4. The cordless apparatus according to claim 1, 2 or 3, wherein the signal strength detection unit is adapted to detect the signal strength, and acquire an average value for the signal strength of a last plurality of times including the signal strength detected this time, and the notification unit is adapted to notify the average value of the signal strength acquired by the signal strength detection unit.

5. The cordless apparatus according to any one of the preceding claims, wherein the radio channels changed by the transmittance control unit are two radio control channels used to transmit and receive commands between the main device and the additional device, and the transmittance control unit is adapted alternately to select one of the two radio control channels.

6. The cordless apparatus according to any one of the preceding claims, wherein the additional device comprises a display unit (53) for displaying information, and the notification unit is adapted to digitize a detection result detected by the signal strength detection unit by stages by comparing the detection result with a predetermined plurality of threshold values and display the digitized result on the display unit in a graphic.

## Patentansprüche

1. Schnurlosgerät (1) mit:
einer Hauptvorrichtung (10); und
einer Zusatzvorrichtung (50), die daran angepasst ist, mit der Hauptvorrichtung über Funk zu kommunizieren;
wobei die Hauptvorrichtung und die Zusatzvorrichtung jeweils eine Kommunikationseinheit (30, 60) haben;
wobei die Hauptvorrichtung eine Sendesteuereinheit aufweist, die daran angepasst ist, Funksignale intermittierend von der Kommunikationseinheit der Hauptvorrichtung während eines Ruhebetriebs der Zusatzvorrichtung zu senden; und
wobei die Zusatzvorrichtung eine
Signalstärkenerfassungseinheit (68), die daran angepasst ist, eine Signalstärke des Funksignals zu erfassen, wenn das von der Hauptvorrichtung gesendete Funksignal durch die Kommunikationseinheit der Zusatzvorrichtung während eines Ruhebetriebs der Hauptvorrichtung aufgenommen wird, und eine Mitteilungseinheit aufweist, die daran angefasst ist, die Signalstärke des Funksignals mitzuteilen, die durch die Signalstärkenerfassungseinheit erfasst wird;
**gekennzeichnet durch** die jeweilige Kommunikationseinheit, die einen Funkkanal, der für eine Funkkommunikation verwendet wird, aus vielen Funkkanälen auswählen kann, deren Frequenzen voneinander verschieden sind;
wobei die Hauptvorrichtung des Weiteren daran angepasst ist, den Funkkanal bei jedem Senden der Funksignale zu ändern.

2. Schnurlosgerät gemäß Anspruch 1, wobei die Zusatzvorrichtung daran angepasst ist, ein Antwortsignal von der Kommunikationseinheit zu senden, wenn das von der Hauptvorrichtung gesendete Funksignal durch die Kommunikationseinheit der Zusatzvorrichtung während eines Ruhebetriebs aufgenommen wird;
wobei die Sendesteuereinheit daran angepasst ist, den Funkkanal, der zum Senden des Funkkanals verwendet wird, zu ändern und dann das Funksignal durch die Kommunikationseinheit nach dem Verstreichen einer vorbestimmten Zeit nach der Aufnahme des Antwortsignals durch die Kommunikationseinheit der Hauptvorrichtung zu senden.

3. Schnurlosgerät gemäß Anspruch 1 oder 2, wobei auf der Grundlage der Signalstärke, die für jeden Funkkanal durch die Signalstärkenerfassungseinheit periodisch erfasst wird, die Mitteilungseinheit daran angepasst ist, zu bestimmen, ob die Signalstärke von allen Funkkanälen ein vorbestimmter Pegel oder größer ist, die durch die Signalstärkenerfassungseinheit erfasste Signalstärke mitzuteilen, darüber zu informieren, dass die Zusatzvorrichtung in einem Zustand ist, bei dem sie mit der Hauptvorrichtung kommunizieren kann, wenn die Signalstärke von allen Funkkanälen der vorbestimmte Pegel oder größer ist, und dem Benutzer mitzuteilen, dass die Zusatzvorrichtung in einem Zustand ist, bei dem sie mit der Hauptvorrichtung nicht kommunizieren kann, wenn die Signalstärke von mindestens einem Funkkanal nicht der vorbestimmte Pegel oder größer ist.

4. Schnurlosgerät gemäß Anspruch 1, 2 oder 3, wobei die Signalstärkenerfassungseinheit daran angepasst ist, die Signalstärke zu erfassen und einen Durchschnittswert der Signalstärke für eine letzte Vielzahl an Zeitpunkten einschließlich der in dieser Zeit erfassten Signalstärke zu akquirieren, und wobei die Mitteilungseinheit daran angepasst ist, den Durchschnittswert der Signalstärke mitzuteilen, der durch die Signalstärkenerfassungseinheit akquiriert wird.

5. Schnurlosgerät gemäß einem der vorherigen Ansprüche, wobei die Funkkanäle, die durch die Sendesteuereinheit geändert werden, zwei Funkkanäle sind, die zum Senden und Aufnehmen von Befehlen zwischen der Hauptvorrichtung und der Zusatzvorrichtung verwendet werden, und wobei die Sendesteuereinheit daran angepasst ist, abwechselnd einen der beiden Funksteuerkanäle auszuwählen.

6. Schnurlosgerät gemäß einem der vorherigen Ansprüche, wobei die Zusatzvorrichtung eine Anzeigeeinheit (53) zum Anzeigen von Informationen aufweist, und wobei die Mitteilungseinheit daran angepasst ist, ein durch die Signalstärkenerfassungseinheit erfasstes Erfassungsergebnis digital durch Stufen darzustellen, indem das Erfassungsergebnis mit einer vorbestimmten Vielzahl an Schwellwerten verglichen wird, und das digitalisierte Ergebnis an der Anzeigeeinheit graphisch anzuzeigen.

## Revendications

1. Dispositif sans fil (1) comprenant :
un dispositif principal (10) ; et
un dispositif supplémentaire (50) adapté afin de communiquer avec le dispositif principal par radio ;
dans lequel le dispositif principal et le dispositif supplémentaire comportent chacun une unité de communication (30, 60) ;
le dispositif principal comprend une unité de commande de facteur de transmission adaptée afin de transmettre des signaux radio de manière intermittente à partir de l'unité de communication du dispositif principal pendant la phase d'attente du dispositif supplémentaire ; et
le dispositif supplémentaire comprend une unité de détection de puissance de signal (68) adaptée afin de détecter une puissance de signal du signal radio lorsque le signal radio émis à partir du dispositif principal est reçu par l'unité de communication du dispositif supplémentaire au cours de la phase d'attente du dispositif principal, et une unité de notification adaptée afin de notifier la puissance de signal du signal radio détectée par l'unité de détection de puissance de signal ;
**caractérisé par le fait que** chaque unité de communication est capable de sélectionner un canal radio utilisé pour la communication radio à partir d'une pluralité de canaux radio dont les fréquences sont différentes les unes des autres ; et
en ce que le dispositif principal est en outre adapté afin de modifier le canal radio en fonction de chaque facteur de transmission des signaux radio.

2. Dispositif sans fil selon la revendication 1, dans lequel le dispositif supplémentaire est adapté afin d'émettre un signal de réponse à partir de l'unité de communication lorsque le signal radio émis à partir du dispositif principal est reçu par l'unité de communication du dispositif supplémentaire au cours de la phase d'attente ; et
l'unité de commande de facteur de transmission est adaptée afin de modifier le canal radio utilisé pour la transmission du signal radio et transmet alors le signal radio à travers l'unité de communication après écoulement d'une durée prédéterminée à partir de la réception du signal de réponse par l'unité de communication du dispositif principal.

3. Dispositif sans fil selon la revendication 1 ou 2, dans lequel, sur la base de la puissance de signal détectée de manière périodique pour chaque canal radio par l'unité de détection de puissance de signal, l'unité de notification est adaptée afin de déterminer si la puissance de signal de l'ensemble des canaux radio est supérieure ou égale à un niveau prédéterminé, de notifier la puissance de signal détectée par l'unité de détection de puissance de signal afin d'informer que le dispositif supplémentaire est dans un état permettant de communiquer avec le dispositif principal lorsque la puissance de signal de l'ensemble des canaux radio est supérieure ou égale au niveau prédéterminé, et de notifier à l'utilisateur que le dispositif supplémentaire est dans un état ne permettant pas de communiquer avec le dispositif principal lorsque la puissance de signal d'au moins un canal radio n'est pas supérieure ou égale au niveau prédéterminé.

4. Dispositif sans fil selon la revendication 1, 2 ou 3, dans lequel l'unité de détection de puissance de signal est adaptée afin de détecter la puissance de signal, et fait l'acquisition d'une valeur moyenne de la puissance de signal d'une dernière pluralité d'instants comportant la puissance de signal détectée à cet instant, et l'unité de notification est adaptée afin de notifier la valeur moyenne de la puissance de signal acquise par l'unité de détection de puissance de signal.

5. Dispositif sans fil selon l'une quelconque des revendications précédentes, dans lequel les canaux radio modifiés par l'unité de commande de facteur de transmission sont deux canaux de commande radio utilisés pour émettre et recevoir des instructions entre le dispositif principal et le dispositif supplémentaire, et l'unité de commande de facteur de transmission est adaptée afin de sélectionner en alternance l'un des deux canaux de commande radio.

6. Dispositif sans fil selon l'une quelconque des revendications précédentes, dans lequel le dispositif supplémentaire comprend une unité d'affichage (53) destinée à afficher des informations, et l'unité de notification est adaptée afin de numériser un résultat de détection détecté par l'unité de détection de puissance de signal par paliers en comparant un résultat de détection avec une pluralité de valeurs de seuil prédéterminées et affiche le résultat numérisé sur l'unité d'affichage sous forme de graphique.
